# EUROPÄISCHE PATENTANMELDUNG

(11) **EP 1 717 379 A2**
(43) Veröffentlichungstag der Anmeldung: **02.11.2006**
(21) Anmeldenummer: 06400017.7
(22) Anmeldetag: 19.04.2006
(51) Int. Cl.: E03C 1/04

(54) **Reinigungsvorrichtung**

(30) Priorität: 28.04.2005 DE 102005020799
(71) Anmelder: Spiegl, Karl, 71134 Aidlingen (DE)
(72) Erfinder: Spiegl, Karl, 71134 Aidlingen (DE)
(74) Vertreter: Steimle, Josef

(57) **Zusammenfassung**

Die Erfindung betrifft eine Vorrichtung zum Reinigen von Bädern und Duschen mit einer Verteil- oder Sprühvorrichtung, wobei die Verteil- oder Sprühvorrichtung an ein Entmineralisierungsgerät für Wasser angeschlossen ist.

## Beschreibung

Die Erfindung betrifft eine Vorrichtung zum Reinigen von Bädern und Duschen mit einer Verteil- oder Sprühvorrichtung.

Es ist bekannt, dass Bäder und Duschen, oder allgemein Nasszellen, gefliest sind beziehungsweise aus Glas bestehende Trennelemente aufweisen. Durch das Verdunsten des Duschwassers bilden sich mineralische Rückstände, zum Beispiel Kalkrückstände und Kalkseifenverbindungen als schmierige Substanz, die insbesondere auf Glasflächen oder auf dunklen Fliesen sowie auf allen verchromten Armaturen gut sichtbar sind und sich daher als störend auswirken. Dabei ist es unerheblich, ob das Leitungswasser entkalkt ist oder nicht. Bei einer Wasserhärte von 22°dH beträgt der Leitwert des Wassers cirka 850 µS. Wird das Wasser teilweise enthärtet, so dass es eine Wasserhärte von zum Beispiel 8°dH besitzt, so erhöht sich der Leitwert um 30 µS und beträgt somit 880 µS. Die Erhöhung des Leitwertes entsteht aufgrund der Natriumionenanreicherung. Die Steinbildner Ca und Mg sind zwar deutlich reduziert, jedoch ist die Gesamtfracht der Mineralien praktisch gleich geblieben. Dies bedeutet, dass nach wie vor Wasserflecken entstehen, wenn dieses enthärtete Wasser verdunstet.

Der Erfindung liegt die Aufgabe zugrunde, eine Reinigungsvorrichtung vorzuschlagen, mit welcher auf einfache Art und Weise Bäder und Duschen gereinigt werden können, so dass eine Zeitersparnis von 95 % entsteht.

Diese Aufgabe wird mit einer Reinigungsvorrichtung erfindungsgemäß dadurch gelöst, dass die Verteil- oder Sprühvorrichtung an ein Entmineralisierungsgerät für Wasser angeschlossen ist.

Mit einer derartigen Vorrichtung kann die Dusche beziehungsweise kann das Bad nach Gebrauch, das heißt nach dem Duschen, mit dem entmineralisierten Wasser gesäubert werden, so dass das die Mineralien enthaltende Wasser abgeschwemmt wird und auf der Oberfläche der Fliesen beziehungsweise Armaturen lediglich noch das entmineralisierte Wasser anhaftet. Wenn dieses entmineralisierte Wasser verdunstet, bilden sich keine Rückstände, da dieses Wasser keine Steinbildner enthält, bzw. praktisch überhaupt keine Mineralien enthält, da der Leitwert von ca. 880 µS auf 20 bis 30 µS reduziert wird. Vorteilhaft ist die Verteil- oder Sprühvorrichtung eine Handbrause.

Das Entmineralisierungsgerät wird von einem Reversosmosegerät gebildet, dem das entmineralisierte Wasser entnommen wird. Ein wesentlicher Vorteil besteht nicht nur in der Zeitersparnis für die Reinigung der Wände und Duschtrennwände sowie der verchromten Oberflächen von Armaturen, sondern auch darin, dass keinerlei Reinigungsmittel, wie Säuren oder Seifenprodukte, benötigt werden, weshalb die erfindungsgemäße Vorrichtung umweltfreundlich ist.

Erfindungsgemäß kann das Entmineralisierungsgerät an die Kalt- oder Warmwasserleitung angeschlossen werden. Außerdem ist das Entmineralisierungsgerät als Speicherbehälter für entmineralisiertes Wasser ausgebildet bzw. enthält einen solchen Speicherbehälter. Hierdurch wird der wesentliche Vorteil erzielt, dass das für den Reinigungsvorgang benötigte entmineralisierte Wasser sofort zur Verfügung steht, so dass der Reinigungsvorgang unmittelbar nach Gebrauch der Dusche vollzogen werden kann, wenn die anhaftenden Wassertropfen noch flüssig, d.h. noch nicht abgetrocknet sind.

Eine besonders bevorzugte Ausführungsform sieht vor, dass das Entmineralisierungsgerät nach Art eines Spülkastens mit Schwimmer ausgebildet ist. Befindet sich das Entmineralisierungsgerät oberhalb der Duschstange, so kann die Entnahme des entmineralisierten Wassers drucklos, das heißt ohne zusätzliche Förderpumpe, erfolgen. Das entmineralisierte Wasser wird sofort nach der Entnahme im Entmineralisierungsgerät wieder erzeugt und gespeichert und für den nächsten Reinigungsvorgang bereitgestellt.

Bei einem Ausführungsbeispiel ist das Entmineralisierungsgerät an die herkömmliche, mit der Kalt- und Warmwasserleitung verbundene Handbrause angeschlossen. Es bedarf also keiner zusätzlichen Handbrause für den Reinigungsvorgang. Von Vorteil ist, dass durch das entmineralisierte Wasser nicht nur die Fliesen, Glas- und Chromteile gereinigt werden, sondern auch die Handbrause selbst.

Bei einem anderen Ausführungsbeispiel ist dem Entmineralisierungsgerät ein Druckspeicher, zum Beispiel ein Membrandruckspeicher oder Gasdruckspeicher, nachgeschaltet. Dies hat den wesentlichen Vorteil, dass das Entmineralisierungsgerät auch unterhalb der Entnahmestelle, das heißt der Handbrause, platziert werden kann, zum Beispiel im Keller. Alternativ oder zusätzlich kann dem Entmineralisierungsgerät eine Förderpumpe nachgeschaltet sein.

Bei einem weiteren Ausführungsbeispiel ist dem Entmineralisierungsgerät ein erstes Ventil nachgeschaltet. Außerdem ist in der Kalt- oder Warmwasserleitung ein zweites Ventil vorgesehen, wobei die Ausgänge der beiden Ventile zusammengeschaltet sind und in die Handbrause münden. Dies hat den wesentlichen Vorteil, dass keine separate Zuleitung für das entmineralisierte Wasser in die Handbrause vonnöten ist, da die Kalt- oder Warmwasserleitung hierfür verwendet werden kann.

Mit Vorzug sind die beiden Ventile elektrisch betätigbar, wobei das erste Ventil stromlos geschlossen und das zweite Ventil stromlos offen ist, und die beiden Ventile gleichzeitig umschalten. Dadurch kann auf einfache Weise der Zulauf von normalem Leitungswasser oder von entmineralisiertem Wasser ausgewählt werden. Diese Umschaltung kann entweder mit einem herkömmlichen Schalter oder drahtlos, zum Beispiel über Funk, erfolgen.

Mit Vorzug ist die Reinigungsvorrichtung als Nachrüstsatz ausgebildet, so dass herkömmliche Duschen und Bäder mit dieser Reinigungsvorrichtung auch nachträglich ausgestattet werden können.

Weitere Vorteile, Merkmale und Einzelheiten der Erfindung ergeben sich aus der nachfolgenden Beschreibung, in der unter Bezugnahme auf die Zeichnung mehrere Ausführungsbeispiele im Einzelnen beschrieben sind. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine Prinzipskizze eines Entmineralisierungsgeräts;
- Figur 2: eine erste Ausführungsform einer Reinigungsvorrichtung mit einer als separate Handbrause ausgebildeten Verteil- oder Sprühvorrichtung;
- Figur 3: eine zweite Ausführungsform der Reinigungsvorrichtung, die an eine bestehende Handbrause angeschlossen ist;
- Figur 4: eine dritte Ausführungsform der Reinigungsvorrichtung mit Druckspeicher; und
- Figur 5: eine vierte Ausführungsform der Reinigungsvorrichtung mit Absperrventilen.

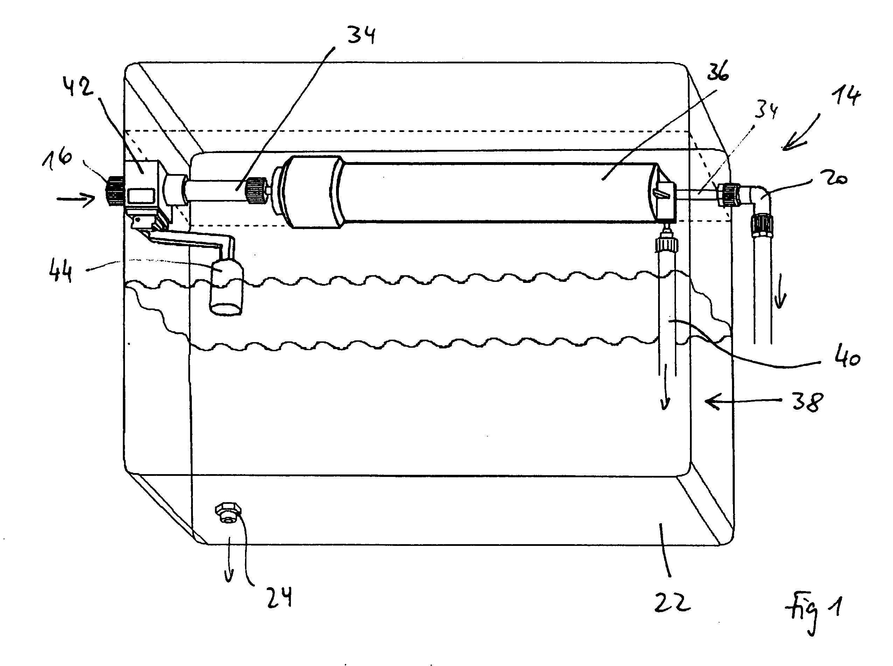

Die Figur 2 zeigt eine typische Montage einer ersten Ausführungsform einer insgesamt mit 10 bezeichneten Reinigungsvorrichtung, bei der oberhalb einer Duschstange 12 ein Entmineralisierungsgerät 14 montiert ist. Dieses Entmineralisierungsgerät 14 besitzt einen Einlauf 16, der an eine Kalt- oder Warmwasserleitung 18 angeschlossen ist. Gegenüberliegend befindet sich ein Auslass 20, über welchen mit Mineralien aufkonzentriertes Wasser abfließt. Wie aus Figur 1 ersichtlich, befindet sich im Boden 22 des Entmineralisierungsgeräts 14 ein Auslass 24 für entmineralisiertes Wasser. An diesen Auslass 24 ist eine Leitung 26 angeschlossen, die zu einer Handbrause 28 führt. Im Bereich der Handbrause 28 und am Ende der Leitung 26 befindet sich ein Absperrventil 30, mit welchem der Zulauf zur Handbrause 28 geöffnet und verschlossen werden kann.

Zum Reinigen wird die Handbrause 28 vom Halter 32 genommen und das Absperrventil30 geöffnet, so dass alle Glas- und Keramikflächen sowie die Armaturen abgespült werden können. Die Flächen bedürfen anschließend keiner Nachbehandlung, was bedeutet, dass das darauf noch anhaftende entmineralisierte Wasser einfach abtrocknen kann. Mit dem entmineralisierten Wasser wird lediglich das Duschwasser abgespült. Dabei wird unter anderem auch die Handbrause 28 selbst gereinigt.

Die Figur 1 zeigt eine vergrößerte Wiedergabe des Entmineralisierungsgeräts 14, welches als Reversosmosegerät ausgebildet ist. Innerhalb des Entmineralisierungsgeräts 14 befindet sich eine Reversosmosemembran mit Druckrohr 12, die über Leitungen 34 an den Einlauf 16 und den Auslass 20 angeschlossen ist. Unterhalb des Druckrohrs 36 befindet sich ein Speichertank 38, in welchen entmineralisiertes Wasser über eine Leitung 40 aus dem Druckrohr 36 einströmt und angesammelt wird. Ist eine vorbestimmte Füllhöhe erreicht, schaltet ein Schwimmerventil 42 den Zulauf am Einlass 16 und dadurch die Produktion von entmineralisiertem Wasser ab. Nach der Entnahme von entmineralisiertem Wasser über den Auslass 24 wird also sofort durch Absenkung des Schwimmers 44 des Schwimmerventils 42 neues entmineralisiertes Wasser nachgeliefert. Das in der Figur 1 gezeigte Entmineralisierungsgerät 14 arbeitet also nach Art eines Spülkastens und kann im Gehäuse eines solchen untergebracht sein.

In der Figur 3 ist ein Ausführungsbeispiel gezeigt, bei welchem die Reinigungsvorrichtung 10 an eine bereits installierte Handbrause 28 angeschlossen ist. Hierfür wird die mit 46 bezeichnete Armatur mit einem T-Stück 48 versehen, über welche die Leitung 26 und somit der Auslass 24 des Entmineralisierungsgeräts 14 angeschlossen ist. Zwischen der Leitung 26 und dem T-Stück 48 befindet sich das Absperrventil 30. Bei dieser Variante der Reinigungsvorrichtung 10 kann die Handbrause 28 sowohl zum herkömmlichen Duschen als auch zum Reinigen verwendet werden.

Die Figur 4 zeigt ein Ausführungsbeispiel, bei welchem das Entmineralisierungsgerät 14 zum Beispiel in einem Heizraum oder in einem Raum mit der Wasserversorgung beziehungsweise -verteilung vorgesehen ist. Die Leitung 18 ist dabei zum Beispiel an einen Wasserverteiler 50 angeschlossen, wohingegen der Auslass 20 über eine Leitung 52 an einen Ablaufkanal 54 angeschlossen ist. Der Auslass 24 befindet sich nun nicht mehr in einem Boden, da das Entmineralisierungsgerät 14 unter Druck steht und die Leitung 26 an einen Druckspeicher 56 angeschlossen ist, der wiederum über eine Leitung 58 mit dem Absperrventil 30 und dem T-Stück 48 in Verbindung steht. Beträgt der Wasserdruck im Druckspeicher 56 zum Beispiel 75% des Netzwasserdruckes, dann wird das Entmineralisierungsgerät 14 und die Produktion von entmineralisiertem Wasser abgeschaltet. Anstelle des Druckspeichers 56 kann auch ein druckloser Speicher verwendet werden, dem jedoch dann eine Förderpumpe nachgeschaltet sein muss.

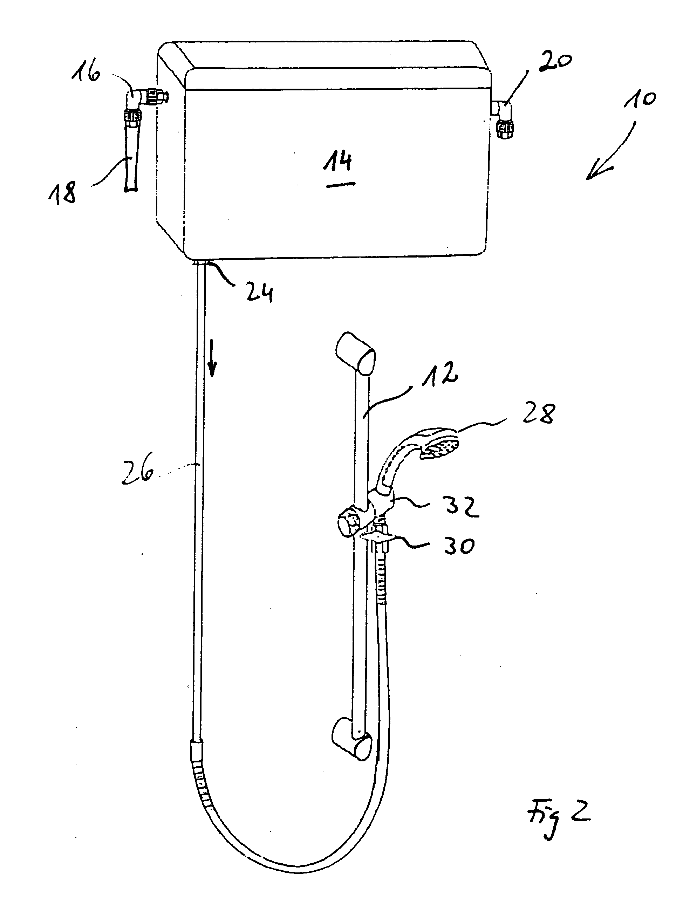

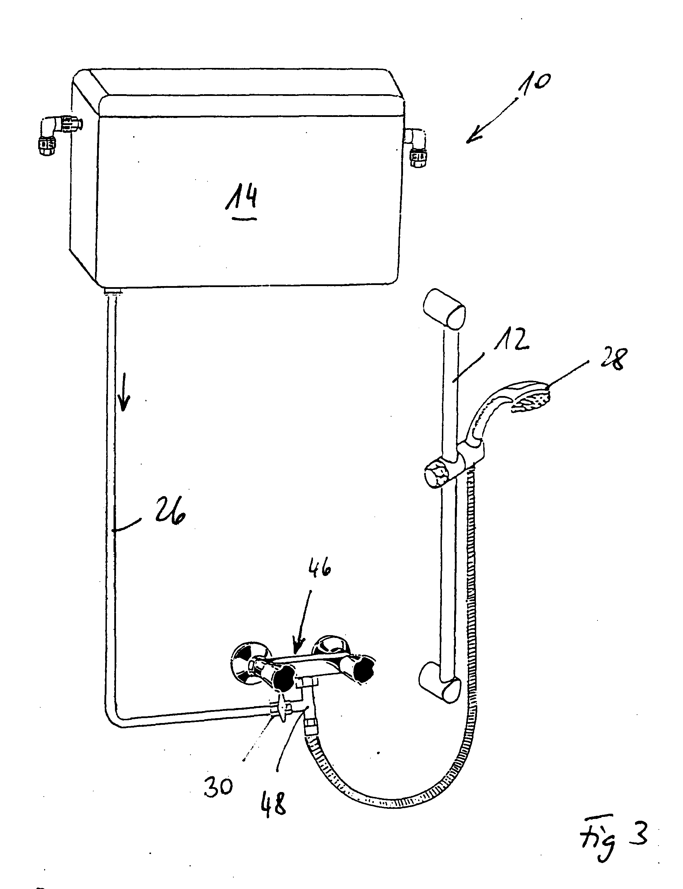

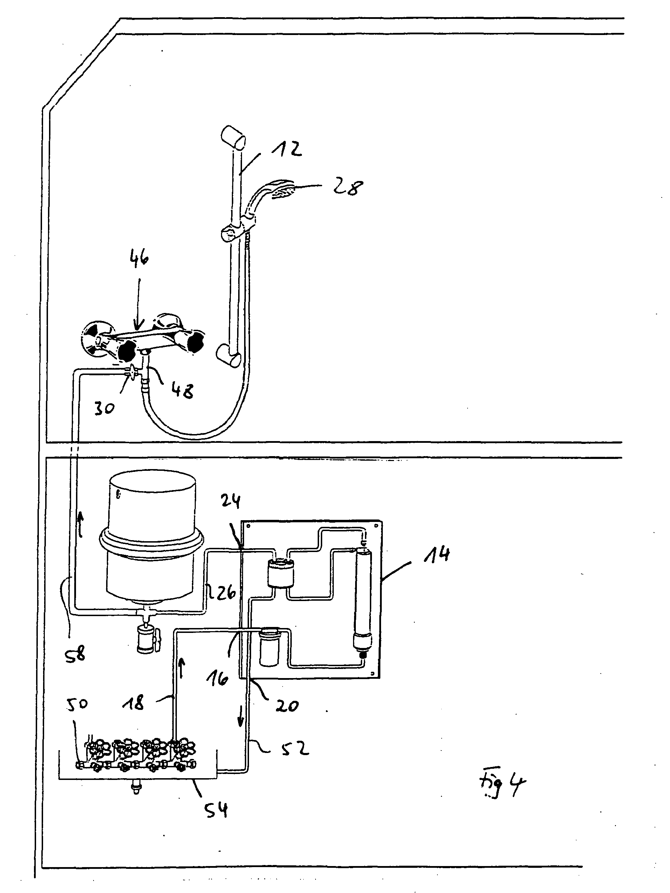

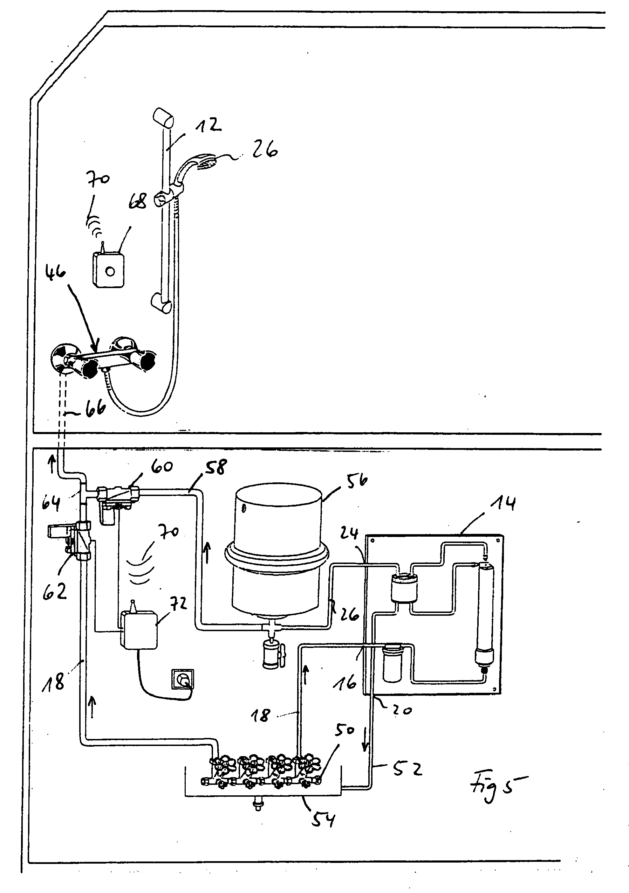

Die Figur 5 zeigt ein weiteres Ausführungsbeispiel der Erfindung, bei welchem die Leitung 58 in ein erstes elektrisch betätigbares Ventil 60 mündet. Die Kalt- oder Warmwasserleitung 18 mündet ihrerseits in ein zweites Ventil 62, wobei der Ausgang beider Ventile 60 und 62 über ein T-Stück 64 mit einer in die Armatur 46 ausmündenden Versorgungsleitung 66 verbunden sind. Das Ventil 60 ist im stromlosen Zustand geschlossen und das Ventil 62 ist im stromlosen Zustand geöffnet, so dass Wasser aus der Leitung 16 ungehindert in die Versorgungsleitung 66 fließen und die Handbrause 26 im herkömmlichen Sinne benutzt werden kann.

Mittels eines Funksenders 68 wird ein Signal 70 an einen Funkempfänger 72 gesendet, der die beiden Ventile 60 und 62 gleichzeitig in den anderen Schaltzustand umschaltet. Auf diese Weise wird der Zulauf von Wasser aus der Leitung 18 gestoppt, so dass entmineralisiertes Wasser aus dem Druckspeicher 56 und der Leitung 58 der Handbrause 26 zugeleitet werden kann.

Nach Ablauf einer gewissen Zeiteinheit werden die beiden Ventile 60 und 62 wieder umgestellt, wobei vorteilhaft zuerst das Ventil 60 geschlossen wird, so dass dem Benutzer signalisiert wird, dass die voreingestellte Zeitspanne abgelaufen ist und er, falls der Reinigungsvorgang noch nicht beendet ist, nochmals ein Funksignal 70 um Öffnen des Ventils 60 aussenden muss, falls er den Reinigungsvorgang fortsetzen möchte. Falls dieses Funksignal 70 nicht ausgesendet wird, öffnet das Ventil 62 nach einer vorgegebenen Zeiteinheit.

Mit der erfindungsgemäßen Reinigungsvorrichtung kann also auf einfache und umweltfreundliche Art und Weise die Oberfläche von Armaturen, Glas und keramischen Flächen gereinigt werden, so dass beim Abtrocknen keine mineralischen Rückstände entstehen. Beim letztgenannten Ausführungsbeispiel ist keine Montage im Bad erforderlich.

## Patentansprüche

1. Vorrichtung zum Reinigen von Bädern und Duschen mit einer Verteil- oder Sprühvorrichtung , **dadurch gekennzeichnet, dass** die Verteil- oder Sprühvorrichtung an ein Entmineralisierungsgerät (14) für Wasser angeschlossen ist.

2. Vorrichtung nach Anspruch 1, **dadurch gekennzeichnet, dass** die Verteil- oder Sprühvorrichtung eine Handbrause (26) ist.

3. Vorrichtung nach Anspruch 1 oder 2, **dadurch gekennzeichnet, dass** das Entmineralisierungsgerät (14) an die Kalt- oder Warmwasserleitung (18) angeschlossen ist.

4. Vorrichtung nach einem der vorhergehenden Ansprüche, **dadurch gekennzeichnet, dass** das Entmineralisierungsgerät (14) als Speicherbehälter ausgebildet oder in einem Speicher (56) für entmineralisiertes Wasser angeordnet ist.

5. Vorrichtung nach einem der vorhergehenden Ansprüche, **dadurch gekennzeichnet, dass** das Entmineralisierungsgerät (14) nach Art eines Spülkastens mit Schwimmer (44) ausgebildet ist.

6. Vorrichtung nach einem der vorhergehenden Ansprüche, **dadurch gekennzeichnet, dass** das Entmineralisierungsgerät (14) an einer mit der Kalt- und Warmwasserleitung (18) verbundenen Handbrause (28) angeschlossen ist.

7. Vorrichtung nach einem der vorhergehenden Ansprüche, **dadurch gekennzeichnet, dass** das Entmineralisierungsgerät (14) drucklos arbeitet.

8. Vorrichtung nach einem der Ansprüche 1 bis 6, **dadurch gekennzeichnet, dass** dem Entmineralisierungsgerät (14) ein Druckspeicher (56), zum Beispiel ein Membrandruckspeicher, nachgeschaltet ist.

9. Vorrichtung nach einem der vorhergehenden Ansprüche, **dadurch gekennzeichnet, dass** dem Entmineralisierungsgerät (14) eine Förderpumpe nachgeschaltet ist.

10. Vorrichtung nach einem der vorhergehenden Ansprüche, **dadurch gekennzeichnet, dass** dem Entmineralisierungsgerät (14) ein erstes Ventil (60) nachgeschaltet ist, dass in der Kalt- oder Warmwasserleitung (18) ein zweites Ventil (62) vorgesehen ist und dass die Ausgänge der beiden Ventile (60, 62) zusammengeschaltet sind und in die Handbrause (28) münden.

11. Vorrichtung nach Anspruch 10, **dadurch gekennzeichnet, dass** die beiden Ventile (60, 62) elektrisch betätigbar sind.

12. Vorrichtung nach Anspruch 10 oder 11, **dadurch gekennzeichnet, dass** das erste Ventil (60) stromlos geschlossen und das zweite Ventil (62) stromlos offen ist.

13. Vorrichtung nach einem der Ansprüche 10 bis 12, **dadurch gekennzeichnet, dass** die beiden Ventile (60, 62) gleichzeitig umschalten.

14. Vorrichtung nach einem der Ansprüche 10 bis 13, **dadurch gekennzeichnet, dass** das erste und/oder zweite Ventil (60, 62) drahtlos betätigbar ist.

15. Vorrichtung nach einem der vorhergehenden Ansprüche, **dadurch gekennzeichnet, dass** sie als Nachrüstsatz ausgebildet ist.
